# EUROPÄISCHE PATENTANMELDUNG

(11) **EP 3 459 775 A1**
(43) Veröffentlichungstag der Anmeldung: **27.03.2019**
(21) Anmeldenummer: 18195613.7
(22) Anmeldetag: 20.09.2018
(51) Int. Cl.: B60K 11/02, B60K 1/00, F16H 41/30

(54) **HYBRIDANTRIEBSANORDNUNG FÜR EIN KRAFTFAHRZEUG**

(30) Priorität: 22.09.2017 DE 102017121989
(71) Anmelder: Voith Patent GmbH, 89522 Heidenheim (DE)
(72) Erfinder: SCHÜTZ, Rainer, 73450 Neresheim (DE); DR. LINDENMAIER, Jochen, 89542 Herbrechtingen (DE); EHLEITER, Joachim, 89520 Heidenheim (DE); MAYER-STAATZ, Günther, 89477 Zöschingen (DE)

(57) **Zusammenfassung**

Die Erfindung betrifft eine Antriebsanordnung, insbesondere Hybridantriebsanordnung für ein Kraftfahrzeug vorgeschlagen, die ein Getriebegehäuse, ein Antriebsmodul mit einer elektrischen Maschine, ein Umrichtermodul zur Regelung der elektrischen Maschine und ein Kühlkreislauf umfasst.

Zur Verbesserung der Kühlung der E-Maschine sowie der Komponenten zur Regelung dieser wird vorgeschlagen, dass an dem Getriebegehäuse eine erste Kontaktfläche, zum Anbringen des Antriebsmoduls, und eine zweite Kontaktfläche, zum Anbringen der Umrichtereinheit, vorgesehen sind.

Es ist weiterhin vorgesehen, dass der Kühlkreislauf einen von einem Kühlmittel durchströmten Kühlkanal aufweist, wobei ein erster Kühlkanalabschnitt durch das Antriebsmodul und ein zweiter Kühlkanalabschnitt durch das Umrichtermodul verlaufen.

## Beschreibung

Die Erfindung betrifft eine Antriebsanordnung, insbesondere Hybridantriebsanordnung für ein Kraftfahrzeug mit Verbrennungsmotor, das in den Antriebsstrang eines Buses oder eines Lastkraftwagens vorgesehen werden kann. Neben dem Antrieb des Kraftfahrzeugs mittels des Verbrennungsmotors besteht bei der erfindungsgemäßen Antriebsanordnung die Möglichkeit, ein Antriebsmoment mittels einer E-Maschine in den Antriebsstrang einzuleiten.

Das Getriebe ist als eine Baueinheit aufgebaut, die das Getriebe, insbesondere ein Automatgetriebe, und ein Antriebsmodul mit einer elektrischen Maschine umfasst,

Zur Regelung der elektrischen Maschine ist ein Umrichtermodul vorgesehen, die die Verwendung der E-Maschine als Motor oder Generator ermöglicht. Zur Kühlung des Umrichters und der E-Maschine muss ein Kühlkreislauf vorgesehen werden, um die elektrischen Komponenten ausreichend zu kühlen.

Aus dem Stand der Technik, beispielsweise der WO2015/018575 A1, ist eine Hybridanordnung bekannt, die eine Kühlung des Rotors der E-Maschine vorschlägt. Zur Kühlung der elektrischen Maschine wird Hydrauliköl eingesetzt, welches auch zur Kühlung der vorgesehenen Lamellenkupplung verwendet wird. Um die Kühlung von elektrischer Maschine und Lamellenkupplung etwas zu trennen werden Kühlmittelleitelemente zur Trennung der Strömungen vorgeschlagen, mittels denen das Kühlmittel für die elektrische Maschine an der Kupplungsanordnung vorbeigeführt wird.

Die Verwendung von Hydrauliköl aus dem Getriebe hat allerdings grundsätzlich den Nachteil, dass dieses Hydrauliköl eine relativ hohe Ausgangstemperatur aufweist, die auf die Leistung der elektrischen Maschinen beschränkend wirkt, so dass eine sehr eingeschränkte Verwendung der elektrischen Maschine gegeben ist.

Eine der Aufgaben der Erfindung ist es, eine Antriebsanordnung mit einer elektrischen Maschine und einer Kühlung bereitzustellen, bei der alle Hybridantriebskomponenten ausreichend gekühlt werden.

Erfindungsgemäß wird diese Aufgabe mit einer Antriebsanordnung gemäß Anspruch 1 gelöst. Weitere vorteilhafte Ausgestaltungen und bevorzugte Lösungsvarianten sind in den hiervon abhängigen Unteransprüchen beschrieben.

Erfindungsgemäß wird Antriebsanordnung, insbesondere Hybridantriebsanordnung für ein Kraftfahrzeug vorgeschlagen, die ein Getriebegehäuse, ein Antriebsmodul mit einer elektrischen Maschine, ein Umrichtermodul zur Regelung der elektrischen Maschine und ein Kühlkreislauf umfasst.

Zur Verbesserung der Kühlung der E-Maschine sowie der Komponenten zur Regelung dieser wird vorgeschlagen, dass an dem Getriebegehäuse eine erste Kontaktfläche, zum Anbringen des Antriebsmoduls, und eine zweite Kontaktfläche, zum Anbringen der Umrichtereinheit, vorgesehen sind.

Es ist vorgesehen, dass der Kühlkreislauf einen von einem Kühlmittel durchströmten Kühlkanal aufweist, wobei ein erster Kühlkanalabschnitt zur Kühlung des Antriebsmoduls im Wesentlichen durch das Antriebsmodul und ein zweiter Kühlkanalabschnitt zur Kühlung des Umrichters im Wesentlichen durch das Umrichtermodul verlaufen.

Dabei können der erste Kühlkanalabschnitt und der zweite Kühlkanalabschnitt mittels einer Verbindungsleitung verbunden sein. Diese Verbindungsleitung kann beispielsweise als flexibler Kühlmittelschlauch oder als ein in das Getriebegehäuse integrierte Kanal ausgeführt sein. Weiterhin kann der Anschluss an den Kühlkreislauf über flexible Kühlmittelschläuche oder ins Getriebegehäuse integrierte Kanäle erfolgen.

Weiterhin kann an dem Getriebegehäuse eine dritte Kontaktfläche für den Anbau einer weiteren Moduleinheit vorgesehen sein. Auch diese Moduleinheit kann über den Kühlkreislauf gekühlt sein. Die Moduleinheit kann dazu einen dritten Kühlkanalabschnitt und eine Pumpe umfassen.

Weiterhin kann bei der Verwendung von integrierten Kanälen vorgesehen sein, dass die Kühlkanalabschnitte über korrespondierende Kanalanschlüsse in den Kontaktflächen verbindbar sind.

In einer weiteren Ausführung kann vorgesehen sein, dass ein Kühlkanalabschnitte in zumindest einer der Kontaktebenen, der Kontaktflächen, in zumindest einem der angrenzenden Bauteile eingelassen ist. Beispielsweise kann der erste Kühlmittelabschnitt im Gehäuse des Antriebsmoduls angeordnet sein.

Der Durchfluss des Kühlmediums im Kühlkreislauf kann derart gestaltet sein, dass zuerst der Kühlkanalabschnitt für das Umrichtermodul und anschließend den Kühlkanalabschnitt für das Antriebsmodul durchströmt wird.

Zur Kühlung des Getriebes kann ein separater Getriebekühlkreislauf vorgesehen sein, da das Getriebe mit einer wesentlich höheren Betriebstemperatur betrieben werden kann bzw. muss.

Ergänzend kann vorgesehen sein, dass in den Kontaktflächen korrespondierende elektrische Leitungselemente vorgesehen sind. Durch die Integration der elektrischen Leitungen wird der Montageaufwand reduziert und es können in den Gehäusen verlaufende Leitungen realisiert werden.

Weitere Merkmale der erfindungsgemäßen Antriebsanordnung und weitere Vorteile der Erfindung ergeben sich aus der nachfolgenden Beschreibung bevorzugter Ausführungsbeispiele unter Bezugnahme auf die Zeichnungen.

Nachfolgend wird die Erfindung anhand von Skizzen näher erläutert.

In diesen zeigen:
- Figur 1: ein Getriebe gemäß dem StdT
- Figur 2: eine Skizze mit dem erfindungsgemäßen Aufbau
- Figur 3: eine Skizze mit einem erweiterten Aufbau
- Figur 4: Ausführung mit eingelassenem Kühlkanal
- Figur 5 a, b: Ausführungen des Kühlkanals

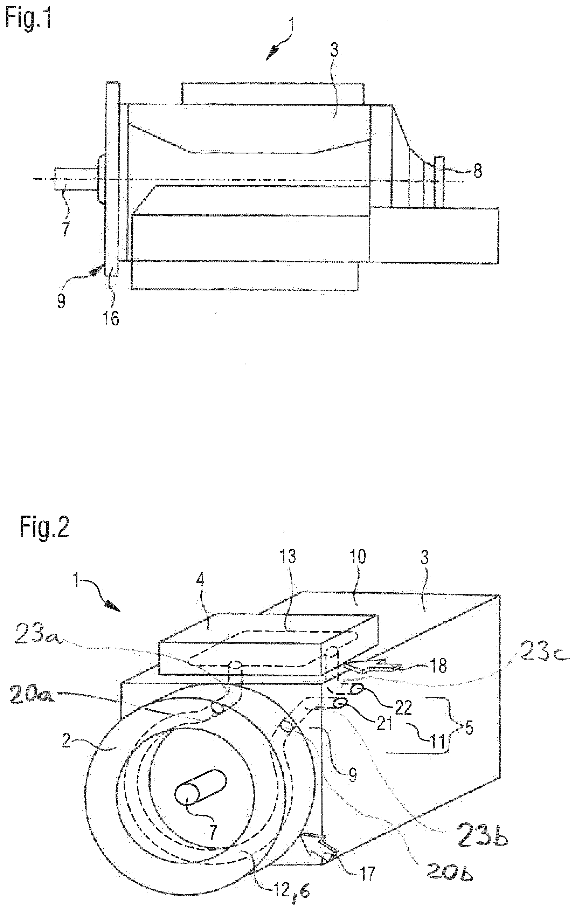

Figur 1 zeigt ein Getriebe gemäß dem StdT. Der Flansch 16 ist an das Getriebegehäuse 3 angeschraubt und weist eine Kontaktfläche 9 auf, über die das Getriebe mit dem Motorgehäuse gekoppelt wird. Auf der Abtriebsseite ist die Getriebeausgangswelle 8 mit dem Anschluss zur Kopplung mit der Gelenkwelle dargestellt.

Figur 2 zeigt eine Skizze mit dem erfindungsgemäßen Aufbau der Antriebsanordnung 1, für ein Kraftfahrzeug mit dem Getriebegehäuse 3, dem Antriebsmodul 2 mit der elektrischen Maschine, das Umrichtermodul 4 zur Regelung der elektrischen Maschine und angedeutet ein Teil des Kühlkreislaufs. An dem Getriebegehäuse 3 ist eine erste Kontaktfläche 9 vorgesehen an der das Antriebsmodul 2 angebracht bzw. mit der das Antriebsmodul gekoppelt ist. Die Kontaktfläche 9 liegt in der ersten Kontaktebene 17. An die zweite Kontaktfläche 10 ist die Umrichtereinheit 4 gekoppelt. Die zweite Kontaktfläche 10 liegt in der zweiten Kontaktebene 18.

Der Kühlkreislauf 5 ist hier nur angedeutet, wobei der Kühlkanal einen ersten Kühlkanalabschnitt 12, der durch das Antriebsmodul 2 verläuft, aufweist und über die Kühlkanalverbindungsstücke 23a, b mit dem Getriebegehäuse 3 gekoppelt ist. Der zweite Kühlkanalabschnitt 13 durch das Umrichtermodul 4 ist wiederum mit dem Kühlkanalverbindungsstücke 23a gekoppelt.

Der Anschluss an den Kühlkreislauf 5 erfolgt über den Kühlwasserzulauf 21 und den Kühlwasserablauf 22.

Nicht dargestellt ist der genaue Verlauf der Kühlkanäle. So kann der erste Kühlkanal beispielsweise auch ein in das Statorgehäuse des Antriebsmoduls 2 eingearbeiteter Kanal sein, der durch den Anbau an das Getriebegehäuse 3 verschlossen wird.

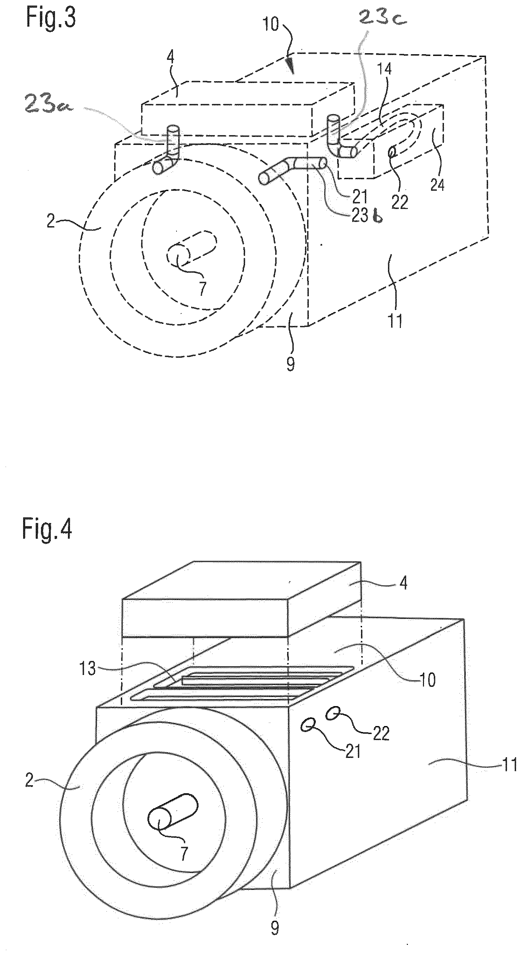

In Figur 3 ist ein weiteres Modul 24 mit dargestellt, das an der dritte Kontaktflächen 11 angeordnet ist, die eine dritte Kontaktebene 19 bildet. Bei diesem Aufbau können in dem Modul ein dritter Kühlkanalabschnitt 14 und eine Pumpe angeordnet sein.

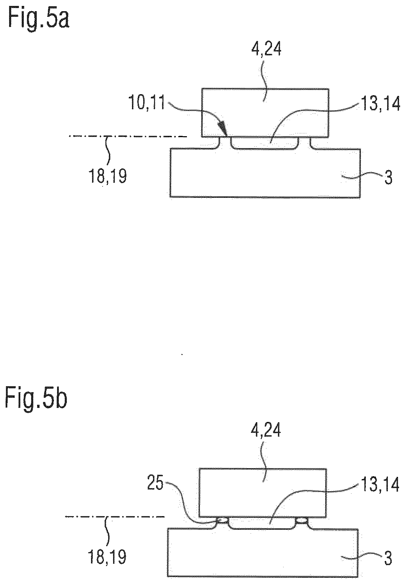

In Figur 4 ist beispielhaft dargestellt, wie ein Kühlkanalabschnitt auch in das Getriebegehäuse 3 eingearbeitet sein kann. Des Weiteren sind in den Figuren 5 beispielhaft in das Gehäuse eingelassene Kanäle dargestellt. Zur besseren Wärmeentkopplung kann wie unten dargestellt auch eine Isolierschicht 25 zwischen dem Getriebegehäuse 3 und dem Modul 4, 24 angeordnet sein.

### Bezugszeichenliste

- 1: Getriebe
- 2: Antriebsmodul
- 3: Getriebegehäuse
- 4: Umrichtermodul
- 5: Kühlkreislauf
- 6: Kühlkanal
- 7: Getriebeeingangswelle
- 8: Getriebeausgangswelle
- 9: erste Kontaktfläche
- 10: zweite Kontaktfläche
- 11: dritte Kontaktfläche
- 12: erster Kühlkanalabschnitt
- 13: zweiter Kühlkanalabschnitt
- 14: dritter Kühlkanalabschnitt
- 15: Verbindungsebene
- 16: Flansch
- 17: erste Kontaktebene
- 18: zweite Kontaktebene
- 19: dritte Kontaktebene
- 20 a, b: Kanalanschluss
- 21: Kühlwasserzulauf
- 22: Kühlwasserablauf
- 23 a, b, c: Kühlkanalverbindungsstücke
- 24: Moduleinheit
- 25: Isolation

## Patentansprüche

1. Antriebsanordnung (1), insbesondere Hybridantriebsanordnung für ein Kraftfahrzeug, umfassend ein Getriebegehäuse (3), ein Antriebsmodul (2) mit einer elektrischen Maschine, ein Umrichtermodul (4) zur Regelung der elektrischen Maschine und einen Kühlkreislauf (5),
**dadurch gekennzeichnet,**
**dass** an dem Getriebegehäuse (3) eine erste Kontaktfläche (9), zum Anbringen des Antriebsmoduls (2), und eine zweite Kontaktfläche (10), zum Anbringen der Umrichtereinheit (4), vorgesehen sind, wobei der Kühlkreislauf (5) einen von einem Kühlmittel durchströmten Kühlkanal (6) aufweist, der aus mehreren Teilabschnitten (12, 13, 14) besteht, wobei ein erster Kühlkanalabschnitt (12) zur Kühlung des Antriebsmoduls (2) im Wesentlichen durch das Antriebsmodul (2) und ein zweiter Kühlkanalabschnitt (13) zur Kühlung des Umrichtermoduls (4) im Wesentlichen durch das Umrichtermodul (4) verlaufen.

2. Antriebsanordnung gemäß Anspruch 1,
**dadurch gekennzeichnet,**
**dass** der erste Kühlkanalabschnitt (12) und der zweite Kühlkanalabschnitt (13) mittels einer Verbindungsleitung (23a) verbunden sind.

3. Antriebsanordnung gemäß Anspruch 1,
**dadurch gekennzeichnet,**
**dass** an dem Getriebegehäuse (3) eine dritte Kontaktfläche (11) für den Anbau einer weiteren Moduleinheit (24) vorgesehen ist.

4. Antriebsanordnung gemäß Anspruch 1,
**dadurch gekennzeichnet,**
**dass** die Moduleinheit (24) einen dritten Kühlkanalabschnitt (14) und eine Pumpe umfasst.

5. Antriebsanordnung gemäß Anspruch 1,
**dadurch gekennzeichnet,**
**dass** die Kühlkanalabschnitte (12, 13, 14) über korrespondierende Kanalanschlüsse(20a, b, 21, 22) in den Kontaktfläche (9, 10, 11) verbindbar sind.

6. Antriebsanordnung gemäß Anspruch 1,
**dadurch gekennzeichnet,**
**dass** ein Kühlkanalabschnitte (12, 13, 14) in zumindest einer der Kontaktebenen (17, 18, 19), der Kontaktflächen (9, 10, 11), in zumindest einem der angrenzenden Bauteile (2, 3, 4, 17) eingelassen ist.

7. Antriebsanordnung gemäß Anspruch 1,
**dadurch gekennzeichnet,**
**dass** das Kühlmedium im Kühlkreislauf (5) zuerst den Kühlkanalabschnitt (13) für das Umrichtermodul (4) und anschließend den Kühlkanalabschnitt (12) für das Antriebsmodul (2) durchströmt.

8. Antriebsanordnung gemäß Anspruch 1,
**dadurch gekennzeichnet,**
**dass** zur Kühlung des Getriebes (1) ein separater Getriebekühlkreislauf vorgesehen ist.

9. Antriebseinheit gemäß Anspruch 1,
**dadurch gekennzeichnet,**
**dass** in den Kontaktflächen (9, 10, 11) korrespondierende elektrische Leitungselemente vorgesehen sind.
